# EUROPÄISCHE PATENTSCHRIFT

(11) **EP 1 998 021 B1**
(45) Veröffentlichungstag und Bekanntmachung des Hinweises auf die Patenterteilung: **18.06.2014**
(21) Anmeldenummer: 08009338.8
(22) Anmeldetag: 21.05.2008
(51) Int. Cl.: F01P 7/16, F01P 11/16, F16K 1/20

(54) **Kühlsystem für eine Brennkraftmaschine**
Cooling system for a combustion engine
Système de refroidissement pour moteur à combustion interne

(30) Priorität: 30.05.2007 DE 102007025149
(43) Veröffentlichungstag der Anmeldung: 03.12.2008
(73) Patentinhaber: Bayerische Motoren Werke Aktiengesellschaft, 80809 München (DE)
(72) Erfinder: Richter, Rainer, 81247 München (DE); Chekaiban, Georg, 85283 Wolnzach (DE); Kovacic, Marko, 85737 Ismaning (DE)

(56) Entgegenhaltungen:
- EP-A1- 0 860 592
- EP-A1- 1 045 120
- WO-A1-2006/078607
- DE-A1- 10 143 091
- DE-A1- 10 234 087
- FR-A1- 2 524 601
- FR-A1- 2 878 013
- US-A- 1 511 204
- US-A- 2 090 401

## Beschreibung

Die Erfindung bezieht sich auf ein Kühlsystem für eine Brennkraftmaschine, mit einer schaltbaren Kühlmittel-Umwälzpumpe und mindestens einem den Kühlmittelkreis bei stillstehender Umwälzpumpe zur Vermeidung eines Thermosyphoneffekts blockierenden Verschlusselement, nach dem Oberbegriff des Patentanspruchs 1.

Aus der US 2,090,401 ist ein Kühlsystem für eine Brennkraftmaschine, mit einer schaltbaren Kühlmittel-Umwälzpumpe und mindestens einem den Kühlmittelkreis bei stillstehender Umwälzpumpe zur Vermeidung eines Thermosyphoneffekts blockierenden Verschlusselement bekannt. Als Verschlusselement ist ein bei stillstehender Umwälzpumpe oberhalb des Thermosyphondrucks geöffnetes und im Bereich des Thermosyphondrucks in die Schließlage zurückgesteuertes Absperrorgan, eine Kugel, vorgesehen. Das Absperrorgan ist selbsttätig geschlossen und passiv druckgesteuert geöffnet.

Nachteilig an dieser Ausführung ist, dass bei einer Schräglage der Brennkraftmaschine die Kugel die Überlauföffnung unter Umständen nicht völlig verschließt und ständig im Strömungsquerschnitt angeordnet ist, was in nachteiliger Weise zu Strömungsverlusten führt.

Aus der EP 1 045 120 A1 sind eine Druckregel- und -halteventilanordnung in Verbindung mit einer Kühlflüssigkeitspumpe und einem Kühlflüssigkeitskreislauf für eine Kraftmaschine bekannt, deren Betriebstemperatur von einem Temperatursensor erfasst und ggf. in Abhängigkeit von weiteren Betriebssignalen zu Ansteuersignalen für ein Druckregel- und -halteventil verarbeitet wird, wobei das Druckregel- und -halteventil einen Ventlischließkörper aufweist, der mit einem zwischen einem Leitungsabschnitt, in dem der zu regelnde Kühlflüssigkeitsdruck herrscht und einem Leitungsabschnitt eines in einen Sauganschluss der Pumpe führenden Rücklaufanschluss angeordneten Ventilsitz zusammenwirkt.

Der Ventilschließkörper ist mit einer Membrane verbunden, die einerseits eine Membrankammer begrenzt, die über eine Verbindungsleitung direkt mit einem Druckanschluss der Pumpe verbunden ist und andererseits eine Steuerdruckkammer begrenzt, die über ein Steuerventil mit der Membrankammer und über die Verbindungsleitung mit dem Druckanschluss der Pumpe verbindbar ist und darüber hinaus über eine Verbindungsleitung mit dem Rücklaufanschluss verbunden ist.

Nachteilig an dieser Ausführung ist der sehr komplexe und kostenintensive Aufbau.

Aus der DE 101 43 091 A1 ist ein Verfahren zum Betrieb eines Kühl- und Heizungskreislaufs für Kraftfahrzeuge mit einer durch Kühlmittel gekühlten Brennkraftmaschine und einer mittels eines EGR-Kühlers gekühlten Abgasrückführung bekannt, deren Kühlmittel von einer Kühlmittelpumpe über den EGR-Kühler zum Heizungswärmetauscher und schließlich zurück zur Brennkraftmaschine gefördert wird. Mittels Temperaturmessung wird der Bedarf an aus dem EGR- Kühler zu gewinnender Wärmezufuhr zum Kühlmittel bestimmt und der hierzu benötigte Abgasentalpiestrom durch den EGR-Kühler wird mittels der Motorsteuerung eingestellt und das Kühlmittel erfährt am Heizungswärmetauscher aufgrund der Wärmetauscherauslegung und eines geringen Kühlmittelvolumenstroms eine Temperaturabsenkung von mindestens 30K.

Nachteilig an der offenbarten Anordnung ist eine aufwendige, aktive Steuerung der Parameter mit Hilfe eines Motorsteuergerätes.

Aus der EP 0 860 592 A1 ist eine Kühlflüssigkeitskreislauf eines Kraftfahrzeug-Antriebsaggregates mit einem Luft-Kühlflüssigkeits-Wärmetauscher sowie mit zumindest einem Zusatzwärmetauscher bekannt, in welchem ein weiteres Medium, insbesondere Hydrauliköl, durch die umgewälzte Kühlflüssigkeit temperierbar ist, wobei im Rücklauf des Luft-Kühlflüssigkeits-Wärmetauschers stromab eines Abzweigs zum Zusatzwärmetauscher ein den Kühlflüssigkeits-Volumenstrom beeinflussendes Ventil vorgesehen ist. Bei dem Ventil handelt es sich um eine in Schließstellung von einer Feder vorgespannte, in ihrem Klappengehäuse desachsiert gelagerte Drosselklappe.

Nachteilig ist die notwendige aktive Vorspannung der Drosselklappe durch eine Feder.

Aus der FR 2 524 601 ist ebenfalls ein von einer Feder vorgespanntes Klappenventil zur Einstellung eines Fluiddurchflusses in einem Kühlsystem bekannt.

Nachteilig ist die notwendige aktive Vorspannung der Drosselklappe durch eine Feder.

Aus der FR 2 878 013 ist ebenfalls ein allgemeines Klappenventil zur Durchflussregelung eines Fluids bekannt. Die Klappe verfügt über eine Achse zum Verdrehen der Klappe in ihrem Gehäuse zur Veränderung des Durchflussquerschnittes.

Nachteilig an diesem Aufbau ist wiederum die notwendige aktive Betätigung der Klappe.

Aus der WO 2006/078607, ist ein Kühlsystem mit einem Wärmetauscher, einem Verbrennungsmotor, einer Kühlmittelschleife, die eine Fluidverbindung zwischen dem Wärmetauscher und dem Verbrennungsmotor herstellt, bekannt. In der Kühlmittelschleife ist ein Bypassventil angeordnet, welches einen Aktuator umfasst, ein Ventilteil, das durch den Aktuator angetrieben wird und wahlweise bewegbar ist zwischen einer ersten Stellung , in der der Fluidstrom den Wärmetauscher umgehen kann und einer zweiten Stellung, in der der Fluidstrom zu dem Wärmetauscher strömen kann und einer Vorspannrichtung, die das Ventilteil in Reaktion auf einen Außer-Betrieb-Zustand des Aktuators in die zweite Stellung vorspannt.

Auch dieses Kühlsystem der benötigt in nachteiliger Weise einen Aktuator zur Betätigung des Bypassventils.

Aus der US 1,511,204 ist ebenfalls ein Kühlsystem für eine Brennkraftmaschine bekannt, die zur Einstellung der Kühlmitteldurchflussmenge über eine von einer Feder vorgespannte Klappe verfügt.

Nachteilig an diesem bekannten Kühlsystem ist wiederum die notwendige Vorspannung der Klappe mittels einer Feder.

Aus der der DE 102 34 087 A1 ist ein Kühlsystem bekannt, bei dem eine Kühlmittelförderung durch Thermosyphonwirkung mit Hilfe von elektrisch betätigten Sperrventilen unterbunden wird, die in der Warmlaufphase der Brennkraftmaschine auf dem Wege über eine elektronische Steuereinheit in Abhängigkeit von Betriebs- und Umgebungsparametern geschlossen werden und dadurch den Kühlmittelkreislauf blockieren.

Eine derartige Ventilsteuerung erfordert einen erhöhten Bau- und Steueraufwand.

Vor allem aber besteht bei diesem bekannten Kühlsystem die Gefahr, dass Druckunterschiede, die bei stillstehender Umwälzpumpe oberhalb des Thermosyphoneffekts im Kühlmittelkreislauf entstehen, an dem geschlossenen Absperrorgan blockiert werden, was der Forderung nach einem atmungsfähigen Kühlsystem widerspricht und beim Entlüften und/oder Befüllen des Kühlsystems zu Funktionsstörungen führen kann.

Demgegenüber ist es Aufgabe der Erfindung, das Kühlsystem der eingangs genannten Art so auszubilden, dass eine nachteilige Thermosyphonströmung unterbunden wird, das Atmungsvermögen des Kühlmittelsystems bei Druckanstiegen oberhalb des Thermosyphondrucks aber ungestört erhalten bleibt.

Diese Aufgabe wird erfindungsgemäß durch das im Patentanspruch 1 gekennzeichnete Kühlsystem gelöst.

Erfindungsgemäß wird aufgrund der besonderen Arbeitsweise des Absperrorgans sichergestellt, dass eine nachteilige Kühlmittelströmung unter Thermosyphonwirkung wirksam verhindert wird, während andrerseits eine Zwangsströmung des Kühlmittels und vor allem auch bei abgeschalteter Umwälzpumpe ein Druckanstieg oberhalb des Thermosyphondrucks vom Absperrorgan ungehindert durchgelassen wird, so dass das Atmungsvermögen des Kühlsystems oberhalb des Thermosyphoneffekts in vollem Umfang erhalten bleibt, mit der weiteren Besonderheit, dass die Sperrwirkung des Absperrorgans nicht nur in der Warmlaufphase, sondern auch noch in der Abkühlphase nach Abschalten der Brennkraftmaschine aufrechterhalten wird und dadurch thermosyphonbedingte Wärmeverluste, die das Warmlaufen der Brennkraftmaschine nach einem Neustart verzögern würden, weitgehend unterbunden werden. Das Halten des Absperrorgans in geschlossener Stellung ist durch eine permanente volumenausgleichende Verbindung der Kühlkanäle der Brennkraftmaschine mit dem Gesamtkühlkreislauf, der außerhalb der Brennkraftmaschine variable Volumen, wie elastische Schläuche, und Luftpolster, beispielsweise in einem Ausgleichsbehälter, umfasst, gewährleistet.

Das Absperrorgan ist als selbsttätig arbeitendes, passives Verschlusselement ausgebildet, und als zwischen einer ersten, einer maximalen Offenstellung entsprechenden Endlage und einer zweiten, einer Schließstellung entsprechenden Endlage verschwenkbare Verschlussklappe, die beabstandet zu einer Schwereachse verschwenkbar festgelegt und unter Schwerkraftwirkung, in der Schließlage gehalten ist.

Gemäß der Erfindung ist bei einem Kühlsystem, bei dem die Verschlussklappe in einem Strömungskanal angeordnet ist, im Strömungskanal ein Aufnahmeraum zur Aufnahme der Verschlussklappe in ihrer ersten Endlage im Wesentlichen außerhalb dessen Strömungsquerschnitts vorgesehen. Dadurch werden bei vollständig geöffneter Stellung der Verschlussklappe Strömungsverluste im Strömungskanal vermieden oder zumindest reduziert und so der Wirkungsgrad im Kühlsystem verbessert.

Die Verschlussklappe weist eine Durchbrechung auf. Damit wird die Konvektionsunterbrechung bei geschlossener Verschlussklappe nicht aufgehoben, es wird jedoch ein geringer Kühlmittelstrom zur Beaufschlagung von Sensoren, wie Temperatursensor oder Thermostat, ermöglicht. Außerdem ist eine derartige Durchbrechung vorteilhaft, wenn die Verschlussklappe aufgrund einer Fehlfunktion nicht wie erforderlich öffnet.

Vorzugsweise ist die Verschlussklappe auch in der zweiten Endlage schwerkraftbedingt in Schließrichtung kraftbeaufschlagt. Dadurch wird in geschlossener Stellung eine gewisse Andruckkraft in Schließrichtung erreicht, ohne dass ein gesondertes Schließelement, wie Rückstellfeder, erforderlich ist. Die Anordnung kann somit baulich besonders einfach und dennoch funktionssicher ausgeführt werden. Darüber hinaus können Nachteile, wie bei Verwendung einer progressiven mechanischen Rückstellfeder die mit zunehmendem Klappenöffnungswinkel progressionsbedingt steigende Öffnungskraft, vermieden werden.

Vorzugsweise ist das Absperrorgan in eine Kühlmittel- und insbesondere in eine Schlauchkupplung des Kühlsystems integriert, wodurch ein besonders platzsparender Einbau des Absperrorgans bei zugleich guter Zugänglichkeit erreicht wird, wahlweise oder zusätzlich lässt sich jedoch auch zumindest ein Absperrorgan in den Kühlmittelkanälen des Motorblocks unterbringen.

Die Erfindung wird nunmehr anhand zweier Ausführungsbeispiele in Verbindung mit den Zeichnungen näher erläutert. Es zeigen in stark schematisierter Darstellung:

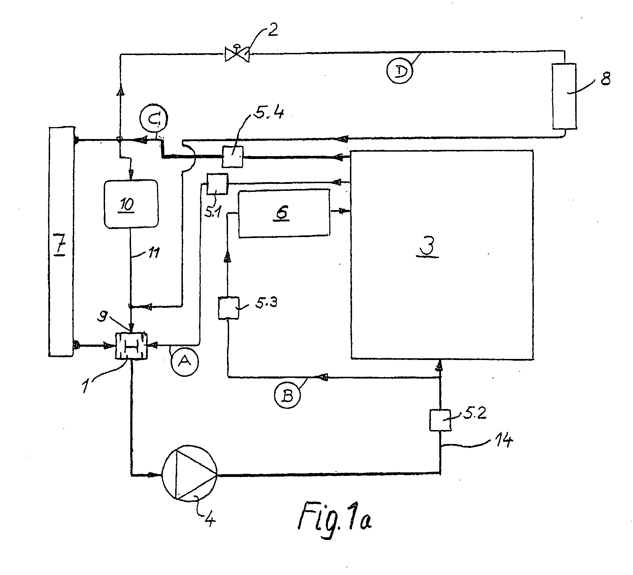

- Fig. 1a: ein Schaltbild eines Kühlsystems für eine Brennkraftmaschine mit mehreren Absperrorganen nach der Erfindung;
- Fig. 1 b: ein Schaltbild eines weiteren Kühlsystems für eine Brennkraftmaschine mit mehreren Absperrorganen nach der Erfindung;
- Fig. 2a, b: eines der Absperrorgane der in Fig.1a, b, gezeigten Kühlsysteme im Querschnitt bei geschlossener (a) und geöffneter (b) Verschlussklappe;
- Fig. 3: ein weiteres Ausführungsbeispiel eines Absperrorgans im Querschnitt; und
- Fig. 4a, b: Absperrorgane mit Durchbrechung.

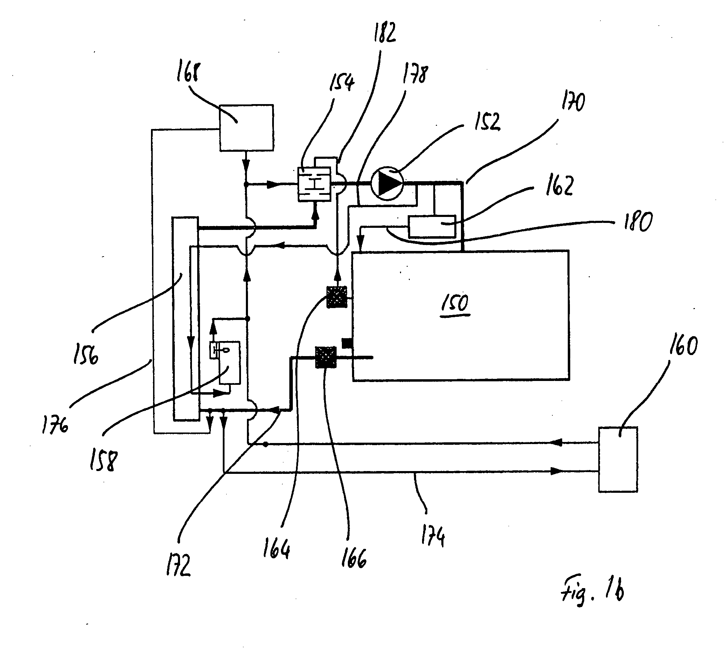

Das in Fig. 1 gezeigte Kühlsystem enthält mehrere, mittels eines Kennfeld-Thermostatventils 1 und eines z. B. elektrisch betätigten Steuerventils 2 selektiv zu- und abschaltbare Kühlmittelpfade A....D, welche an das Kühlkanalsystem der Brennkraftmaschine 3 angeschlossen sind und durch eine gemeinsame Kühlmittel-Umwälzpumpe 4 betrieben werden.

Im Zuge der Kühlmittelpfade A, B und C sind weiter unten näher beschriebene Absperrorgane 5.1...5.4 angeordnet, durch die ein Thermosyphoneffekt bei abgeschalteter Umwälzpumpe 4 wirksam unterbunden wird.

Der Kühlmittelpfad A verläuft von der Brennkraftmaschine 3 über ein Absperrorgan 5.1 zum Thermostatventil 1 und von dort über ein weiteres Absperrorgan 5.2 zurück zur Brennkraftmaschine 3 und fungiert als Bypasskreis beim Kaltstart oder in der Niedrigtemperaturphase der Brennkraftmaschine 3.

Der Kühlmittelpfad B führt von einer Abzweigung abströmseitig der Pumpe 4 auf dem Weg über ein Absperrorgan 5.3 zum Ölkühler 6 und dann in das Kühlkanalsystem der Brennkraftmaschine 3.

Der Kühlmittelpfad C bildet den Hauptkühlkreis, welcher wechselweise zum Bypasspfad A in der im Sinne der Fig. 1 rechten Schaltposition des Thermostatventils 1 im Bereich höherer Betriebstemperaturen der Brennkraftmaschine 3 aktiviert wird und von einem Kühlmittelauslass der Brennkraftmaschine 3 über ein Absperrorgan 5.4 und den Kühler 7 zum Thermostatventil 1 und dann in gleicher Weise wie der Bypasspfad A wieder zurück zur Brennkraftmaschine 3 verläuft.

Der Kühlmittelpfad D schließlich, der zur Temperierung des Fahrzeug-Innenraums dient und mittels des Steuerventils 2 zu- und abschaltbar ist, erstreckt sich von einer Abzweigung des Hauptkühlkreises C abströmseitig des Absperrorgans 5.4 über einen Innenraum-Wärmetauscher 8 zu einem Einlass 9 des Thermostatventils 1, welcher unabhängig von der Ventilstellung ständig freigeschaltet ist, und mündet dann in die vom Thermostatventil 1 über die Pumpe 4 und das Absperrorgan 5.2 zur Brennkraftmaschine 3 zurücklaufende Kühlmittelleitung.

Komplettiert wird das Kühlsystem durch ein Ausgleichsgefäß 10, welches im Zuge einer ständig geöffneten Zweigleitung 11 angeordnet ist, die vom Hauptkühlkreis C abströmseitig des Absperrorgans 5.4 abzweigt und in den kontinuierlich freigeschalteten Ventileinlass 9 mündet.

Ein Schaltbild eines weiteren Kühlsystems für eine Brennkraftmaschine 150 mit mehreren Absperrorganen 164, 166 nach der Erfindung ist in Figur 1b gezeigt. Eine Kühlmittelpumpe 152 dient zur Umwälzung von Kühlmittel im Kühlsystem. Mittels eines Thermostatventils 154 wird die Kühlmittelströmung dabei abhängig vom Kühlbedarf durch einen Kühler 156 und/oder an diesem vorbei geleitet. Die Kühlmittelpumpe 152 ist in einem Leitungsabschnitt 170 zwischen Thermostatventil 154 und Brennkraftmaschine 150 angeordnet, wobei die Druckseite der Kühlmittelpumpe 152 der Brennkraftmaschine 150 zugeordnet ist. Ein Leitungsabschnitt 172 erstreckt sich zwischen Brennkraftmaschine 150 und Kühler 156. Vor dem Einlass zum Kühler 156 zweigen den Kühler 156 umgehende Leitungsabschnitte 174, 176 ab. Der Leitungsabschnitt 172 führt durch einen Heizungswärmetauscher 160 zum Thermostatventil 154, der Leitungsabschnitt 174 führt über einen Ausgleichsbehälter 168 zum Thermostatventil 154. Druckseitig der Kühlmittelpumpe 152 zweigen Leitungsabschnitte 178, 180 ab. Der Leitungsabschnitt 178 führt durch den Kühler 156 und einen Ölkühler 158 zum Thermostatventil 154, der Leitungsabschnitt 180 führt über einen Ladeluftkühler zur Brennkraftmaschine 150. Ein Leitungsabschnitt 182 führt von der Brennkraftmaschine 150 zum Thermostatventil 154. Jeweils ein erfindungsgemäßes Absperrorgan ist im Leitungsabschnitt 180 und im Leitungsabschnitt 172 vor den Abzweigungen der Leitungsabschnitte 174, 176 angeordnet. Im der Figur sind die Strömungsrichtungen in den Leitungen durch Pfeile angedeutet. Die Angaben "vor" und "nach" etc. in diesem Absatz sind in Bezug auf diese Strömungsrichtungen zu verstehen.

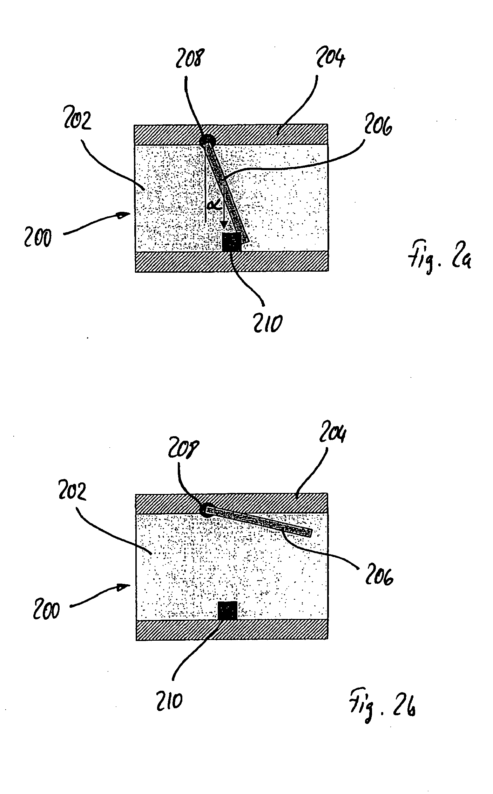

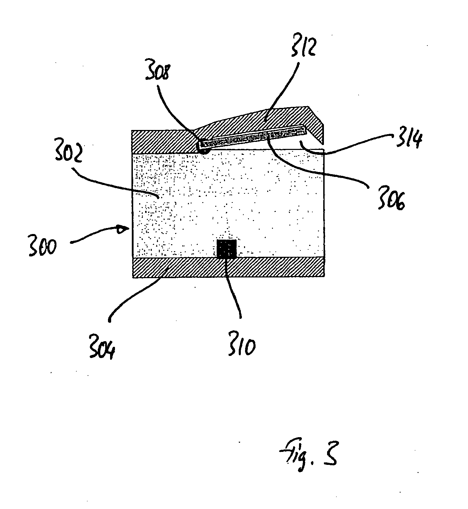

Figur 2a und Figur 2b zeigt eines der Absperrorgane 200 der in den Figuren 1a, b dargestellten Kühlsysteme im Querschnitt bei geschlossener (a) und geöffneter (b) Verschlussklappe 206, 306. Ein weiteres Ausführungsbeispiel eines Absperrorgans 300 ist in Figur 3 im Querschnitt gezeigt. Die in den Figuren 2a, b und 3 im einzelnen gezeigten Absperrorgane 200, 300 sind vorzugsweise im Bereich von Schlauchkupplungen in das Kühlsystem integriert und als passiv arbeitende Verschlussklappen 206, 306 ausgebildet.

Gemäß Fig. 2a, b und 3, sind die Verschlussklappen 206, 306 in einem innerhalb einer Kanalwandung 204, 304 gebildeten Strömungskanal 202, 302 angeordnet und bestehen jeweils aus einer um eine Drehachse 208 schwenkbaren Klappe 206, 306, welche schwerkraftbedingt in die in Fig. 2a gezeigte Sperrlage gedrückt wird, in der sie den Kühlmittelpfad blockieren, solange die Umwälzpumpe 4, 152 stillsteht und die anliegende Druckdifferenz im Bereich des Thermosyphoneffekts verbleibt. Damit die Verschlussklappe 206, 306 auch in Schließstellung (Fig. 2a) in Schließrichtung schwerkraftbedingt kraftbeaufschlagt ist, ist die Verschlussklappe 206, 306 beabstandet zu einer Schwereachse verschwenkbar festgelegt, insbesondere liegt die Drehachse 208, 308 der Klappe 206, 306 an ihrem Rand. Auch Schließstellung liegt der Klappenschwerpunkt nicht lotrecht unter der Drehachse 208, 308, sondern die Klappe 206, 306 schließt in Schließstellung mit der Senkrechten einen Winkel α ein, sodass auch in Schließstellung schwerkraftbedingt eine Kraft in Schließrichtung auf die Klappe 206, 306 wirkt. Hierfür ist ein Anschlag 210, 310 vorgesehen, der dementsprechend nicht lotrecht unter der Drehachse 208, 308 liegt. Ist bei einer anderen Ausführung jedoch der Strömungskanal nicht waagerecht angeordnet, kann die Verschlussklappe mit der Strömungskanalachse durchaus einen rechten Winkel einschließen. Um einen Schwerkraftangriff an der Klappe zu ermöglichen, kann die Klappe auch eine ungleichmäßige Gewichtsverteilung aufweisen, insbesondere können ein oder mehrere Gewichte vorgesehen sein, beispielsweise kann in einer Kunststoffklappe ein Metallgewicht eingebracht, wie eingespritzt oder eingegossen, sein. Um einen Schwerkraftangriff an der Klappe positiv zu beeinflussen kann die Klappe aus einem besonderem Material, beispielsweise einem besonders schweren Material, wie Metall oder hochdichtem Kunststoff, hergestellt sein. Auf diese Weise werden thermosyphonbedingte Wärmeverluste bei stillstehender Umwälzpumpe 4, 152 sowohl in der Warmlaufphase bis zum Erreichen der Betriebstemperatur als auch in der Abkühlphase nach dem Abschalten der Brennkraftmaschine 3, 150 wirksam vermieden. Wenn die Pumpe 4, 152 jedoch läuft oder bei stillstehender Pumpe 4, 152 eine Druckdifferenz oberhalb des Thermosyphoneffekts an der Verschlussklappe 206, 306 anliegt, so öffnet sich diese und gibt den Kühlmittelpfad 202, 302 frei.

Bei der Ausführungsform nach Fig. 3 weist die Kanalwandung 204, 304 eine Ausbuchtung 312 auf, sodass im Strömungskanal 202, 302 ein Aufnahmeraum 314 zur Aufnahme der Verschlussklappe 306 in vollständiger Offenstellung im Wesentlichen außerhalb dessen Strömungsquerschnitts vorgesehen ist..

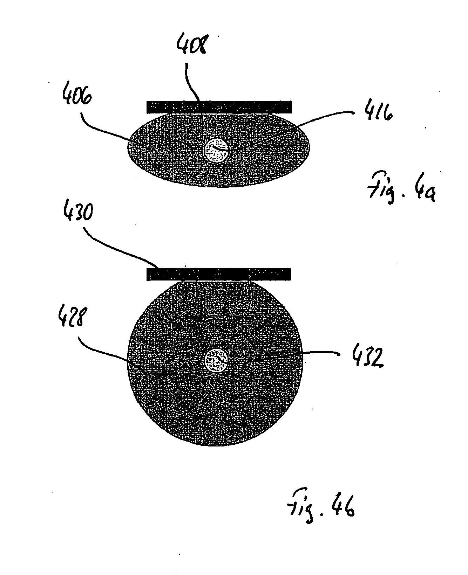

Verschlussklappen 406, 428 mit Durchbrechung 416, 432 sind in den Figuren 4a, b gezeigt. Dabei weist die in Figur 4a dargestellte Verschlussklappe 406 eine ovale Form und die in Figur 4b dargestellte Verschlussklappe 428 eine runde Form auf. Die Durchbrechung 416, 432 ist jeweils rund als Bohrung ausgeführt. Jeweils am Rand der Verschlussklappe 406, 428 ist die Drehachse 408, 430 zur verschwenkbaren Befestigung der Verschlussklappe 406, 428 im Strömungskanal angeordnet. Die ovale Klappe 406 ist zur Verwendung in einem ovalen Strömungskanal und die Klappe 428 ist zur Verwendung in einem runden Strömungskanal bestimmt. Ein Strömungskanal kann jedoch auch eine andere Querschnittsform aufweisen, beispielsweise eckig, wobei die Klappe dann eine entsprechende Form aufweist.

Abschließend sei darauf hingewiesen, dass durch die Absperrorgane 5 nicht nur eine Zirkulation des Kühlmittels unter Thermosyphonwirkung in einem geschlossenen Kühlkreislauf, sondern im Rahmen der Erfindung auch eine Konvektionströmung aufgrund der Temperaturdifferenz in der Flüssigkeitssäule von längeren Steigleitungen vermieden werden kann, wie dies in Fig. 1 durch das etwa in der Mitte der Steigleitung 14 angeordnete Absperrorgan 5.2 angedeutet ist. Ferner können die Absperrorgane 5 anstatt in die Kühlmittelleitungen bzw. - kupplungen ohne weiteres auch in das Kühlkanalsystem der Brennkraftmaschine 3 selbst integriert sein.

## Patentansprüche

1. Kühlsystem für eine Brennkraftmaschine (3, 150), mit einer schaltbaren Kühlmittel-Umwälzpumpe (4, 152) und mindestens einem den Kühlmittelkreis bei stillstehender Umwälzpumpe zur Vermeidung eines Thermosyphoneffekts blockierenden Verschlusselement, wobei als Verschlusselement ein bei stillstehender Umwälzpumpe (4, 152) oberhalb des Thermosyphondrucks geöffnetes und im Bereich des Thermosyphondrucks in die Schließlage zurückgesteuertes Absperrorgan (5, 164, 166, 200, 300) vorgesehen ist, und wobei das Absperrorgan (5, 164, 166, 200, 300) selbsttätig geschlossen und passiv druckgesteuert geöffnet ist,
**dadurch gekennzeichnet, dass** das Absperrorgan (5, 164, 166, 200, 300) als zwischen einer ersten, einer maximalen Offenstellung entsprechenden Endlage und einer zweiten, einer Schließstellung entsprechenden Endlage verschwenkbare Verschlussklappe (206, 306, 406, 428) ausgebildet ist und wobei die Verschlussklappe'(206, 306, 406, 428) beabstandet zu einer Schwereachse verschwenkbar festgelegt und unter Schwerkraftwirkung in der Schließlage gehalten ist und wobei die Verschlussklappe (206, 306, 406, 428) in einem Strömungskanal (202, 302) angeordnet ist, wobei im Strömungskanal (202, 302) ein Aufnahmeraum (314) zur Aufnahme der Verschlussklappe (306) in ihrer ersten Endlage im Wesentlichen außerhalb dessen Strömungsquerschnitts (302) vorgesehen ist und die Verschlussklappe (206, 306, 406, 428) eine Durchbrechung (416, 432) aufweist.

2. Kühlsystem nach Anspruch 1, **dadurch gekennzeichnet, dass** die Verschlussklappe (206, 306, 406, 428) auch in der zweiten Endlage schwerkraftbedingt in Schließrichtung kraftbeaufschlagt ist.

3. Kühlsystem nach Anspruch 1 oder 2 , **dadurch gekennzeichnet, dass** die Verschlussklappe (206, 306, 406, 428) einteilig ausgebildet und exzentrisch gelagert ist.

4. Kühlsystem nach einem der Ansprüche 1 bis 3, **dadurch gekennzeichnet, dass** das Absperrorgan (5, 164, 166) in eine Kühlmittelkupplung (12) integriert ist.

## Claims

1. A cooling system for an internal combustion engine (3, 150), with a switchable coolant circulating pump (4, 152) and at least one closure element for avoiding a thermosiphon effect by blocking the coolant circuit when the circulating pump is inoperative, wherein the closure element is a shut-off means (5, 164, 166, 200, 300) which, when the circulating pump (4, 152) is inoperative, is opened above the thermosiphon pressure and moved back into the closed position when near the thermosiphon pressure, and wherein the shut-off means (5, 164, 166, 200, 300) is automatically closed and is passively opened, controlled by the pressure,
**characterised in that** the shut-off means (5, 164, 166, 200, 300) is a flap valve (206, 306, 406, 428) pivotable between a first end position corresponding to a maximum open setting and a second end position corresponding to a closed setting and wherein the flap valve (206, 306, 406, 428) is arranged to pivot at a distance from a gravity axis and is held in the closed position by gravity and wherein the flap valve (206, 306, 406, 428) is disposed in a flow duct (202, 302), wherein the flow duct (202, 302) contains a space (314) for holding the flap valve (306) in its first end position, substantially outside the flow cross-section thereof (302), and the flap valve (206, 306, 406, 428) has an opening (416, 432).

2. A cooling system according to claim 1, **characterised in that** the second end position also, the closure valve (206, 306, 406, 428) is biased by gravity in the closing direction.

3. A cooling system according to claim 1 or 2, **characterised in that** the flap valve (206, 306, 406, 428) is formed in one piece and eccentrically mounted.

4. A cooling system according to any of claims 1 to 3, **characterised in that** the shut-off means (5, 164, 166) is incorporated in a coolant coupling (12).

## Revendications

1. Système de refroidissement d'un moteur à combustion interne (3, 150) comportant une pompe de circulation de fluide de refroidissement (4, 152) ainsi qu'au moins un élément de fermeture bloquant le circuit de circulation du fluide de refroidissement lorsque la pompe de circulation est au repos pour empêcher un effet de thermosiphon, dans lequel, entant qu'élément de fermeture il est prévu un organe de blocage (5, 164, 166, 200, 300) ouvert lorsque la pompe de circulation (4, 152) est au repos, au-dessus de la température de thermosiphon et ramené dans la position de fermeture dans la plage de la pression de thermosiphon, et l'organe de blocage (5, 164, 166, 200, 300) étant automatiquement fermé et ouvert passivement en étant commandé par la pression, **caractérisé en ce que**
l'organe de blocage (5, 164, 166, 200, 300) est réalisé sous la forme d'un clapet de fermeture (206, 306, 406, 428) susceptible de pivoter entre une première position d'extrémité correspondant à la position d'ouverture maximum, et une seconde position d'extrémité correspondant à la position de fermeture, le clapet de fermeture (206, 306, 406, 428) étant monté pivotant à distance d'un axe de gravité et étant maintenu en position de fermeture sous l'action de la gravité, le clapet de fermeture (206, 306, 406, 428) étant monté dans un canal d'écoulement (202, 302), dans lequel est prévue une chambre de réception (314) du clapet de fermeture (306) dans sa première position d'extrémité, essentiellement à l'extérieur de sa section d'écoulement (302), et le clapet de fermeture (206, 306, 406, 428) comportant une découpure (416, 432).

2. Système de refroidissement conforme à la revendication 1, **caractérisé en ce que**
dans la seconde position d'extrémité le clapet de fermeture (206, 306, 406, 428) est également sollicité par la force dans la direction de fermeture sous l'action de la gravité.

3. Système de refroidissement conforme à la revendication 1 ou 2,
**caractérisé en ce que**
le clapet de fermeture (206, 306, 406, 428) est réalisé en une seule pièce et logé de manière excentrique.

4. Système de refroidissement conforme à l'une des revendications 1 à 3,
**caractérisé en ce que**
l'organe de blocage (5, 164, 166) est intégré dans un accouplement de fluide de refroidissement (12).
